# EUROPEAN PATENT SPECIFICATION

(11) **EP 4 080 874 B1**
(45) Date of publication and mention of the grant of the patent: **04.12.2024**
(21) Application number: 21305534.6
(22) Date of filing: 23.04.2021
(51) Int. Cl.: H04N 25/772, H04N 25/77

(54) **LIGHT SENSOR**
LICHTSENSOR
CAPTEUR DE LUMIÈRE

(43) Date of publication of application: 26.10.2022
(73) Proprietor: STMicroelectronics (Research & Development) Limited, Buckinghamshire SL7 1EY (GB); STMICROELECTRONICS (GRENOBLE 2) SAS, 38000 Grenoble (FR)
(72) Inventor: RAYNOR, Jeffrey M., EDINBURGH, EH12 5HZ (GB); MOENECLAEY, Nicolas, 38210 VOUREY (FR)
(74) Representative: Cabinet Beaumont

(56) References cited:
- WO-A1-2016/191852
- US-A1- 2007 177 043
- US-A1- 2008 258 047
- US-A1- 2017 221 947

## Description

### Technical field

The present disclosure relates generally to electronic circuits, and, more particularly, to light sensors.

### Background art

Known light sensors, for example, known ambient light sensors, ALS, comprises a plurality of pixels arranged in a matrix of pixels comprising pixel rows and pixel columns.

Among these known light sensors, light sensors in which each pixel comprises a plurality of photodiodes are known. In such light sensors, the readout circuit of each pixel is generally disposed at an end of a row or a column comprising the pixel. This result in long conductive wires for coupling the pixel to its readout circuit, and, thus, in a routing capacitance on an input of the readout circuit. As the capacitance of the photodiodes of the pixels tends to decrease, the impact of the routing capacitance during a readout phase of the pixels becomes an issue.

This is, for example, the case when the photodiodes of the pixels are of the island-type, or, said in other word, when the pixels comprise island photodiodes. Indeed, the intrinsic capacitance of an island photodiode is, for example, at least ten times lower the one of a conventional photodiode, for example, of a pinned photodiode. An island photodiode is, for example, described in US patent 6,998,659 and in US patent applications 10418402 and 10922590.

US 2007/177043 A1, WO 2016/191852 A1 and US 2008/258047 A1 show image sensors with a different distributed amplifier architectures. US 2017/221947 A1 shows an image sensor with a reset feedback loop.

### Summary of Invention

There is a need to overcome all or some of the drawbacks of known light sensors, for example, of known ambient light sensors.

One embodiment addresses all or some of the drawbacks of known light sensors, for example, of known ambient light sensors.

One embodiment provides a light sensor according to claim 1.

Another embodiment provides a method according to claim 15.

The appended dependent claims define further embodiments.

### Brief description of drawings

The foregoing features and advantages, as well as others, will be described in detail in the following description of specific embodiments given by way of illustration and not limitation with reference to the accompanying drawings, in which:
Figure 1 illustrates an example of an embodiment of a pixel of a light sensor;
Figure 2 illustrates, in a very schematic manner, and under the form of blocks, an embodiment of a light sensor comprising the pixel of Figure 1;
Figure 3 illustrates another example of the pixel of the Figure 1;
Figure 4 illustrates, in a very schematic manner, and under the form of blocks, an embodiment of a light sensor comprising the pixel of Figure 3; and
Figure 5 illustrates a further embodiment of a pixel of a light sensor.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the usual electronic systems and applications which may comprise a light sensor have not been described, the described embodiments and variants being compatible with these usual systems and applications.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

In known light sensors comprising a plurality of pixels arranged in a matrix of pixel rows and pixel columns, in which each pixel comprises a plurality of photodiodes, the readout circuit of each pixel usually comprises amplifiers. This is, for example, the case of ambient light sensors where each pixel comprises a plurality of color channel, each color channel comprising one or several photodiodes of the pixel. Preferably, the photodiodes of the different color channels are disposed relative to each other so that the different color channels have a common-centroid layout, in order to reduce the spatial sensitivity of the sensor. Said in other words, in each pixel, the photodiodes of the different color channels are disposed relative to each other so that the sensor is insensitive to the spatial distribution of light, the colors of light and/or the orientation of the sensor (the angle of incident light).

Each amplifier of the readout circuit of the pixel has an input connected to a first electrode, or terminal, of one or several photodiodes of the pixel. Each amplifier comprises an operational amplifier having one of its inverting input and non-inverting input connected to the first electrode of said one or several photodiodes, and a feedback loop connected between an output of the operational amplifier, that is, the output of the amplifier of the readout circuit, and the first electrode of said one or several photodiodes.

The operational amplifier comprises a differential pair having one transistor, the gate of which being a first input of the operational amplifier, and one other transistor, the gate of which being a second input of the operational amplifier. The differential pair, along with a load stage of the differential pair and a bias circuit of the differential pair, form, for example, an input stage of the operational amplifier. The operational amplifier further comprises a gain stage, which couples the differential pair to the output of the operational amplifier. The output of the operational amplifier, is for example, connected to an analog-to-digital converter, ADC.

In order to reduce the length of the conductive wire connecting the first electrode of a photodiode of a pixel to the input of an amplifier of the readout circuit of the pixel, that is, the length of the wire connecting the first electrode of this photodiode to the gate of a first one of the two transistors of the differential pair of the amplifier, the present disclosure proposes to split the differential pair, so that the first transistor is, for example, disposed close to the first electrode of said one or several photodiodes, whereas the second transistor of the differential pair may be disposed far from the photodiodes.

Said in other words, the present disclosure proposes to split the amplifier into a first part comprising the second transistor of the differential pair, and a second part comprising the first transistor of the differential pair. According to an embodiment, each first part of the amplifier further comprises one feedback loop of the amplifier. Further to the second transistor of the differential pair, the first part of the amplifier preferably comprises the load stage of the differential pair, the bias circuit of the differential pair, and the gain stage of the amplifier.

More precisely, the present disclosure proposes to provide one second part of the amplifier for each of a plurality of photodiodes of a pixel, and to selectively couples, for example, using switches or multiplexers, each second part to a same first part of the amplifier. By doing this, each second part may be disposed close to the photodiode the second part is associated with, for example at less than 50 µm from the photodiode. As each second part of the amplifier comprises one first transistor of the differential pair of the amplifier, the first transistor may be disposed close to the photodiode the second part is associated with, for example at less than 50 µm from the photodiode. As a result, the routing capacitance between the photodiode and the corresponding first transistor of the differential pair is reduced.

Several examples of embodiments will be now described in more detail with the Figures.

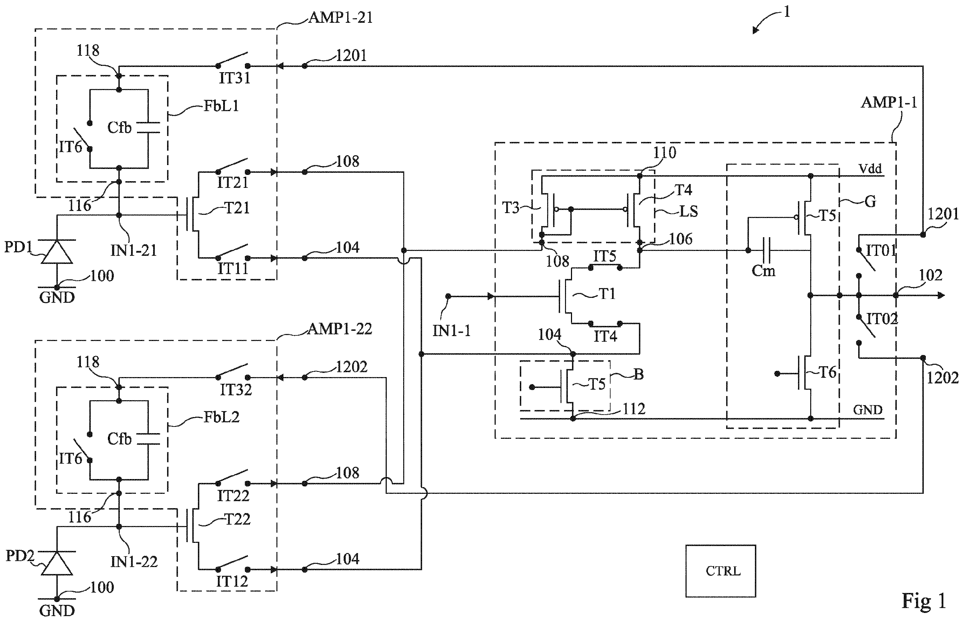

Figure 1 illustrates an example of an embodiment of a pixel 1 of a light sensor. Although not shown on Figure 1, the sensor, for example, an ambient light sensor, comprises a plurality of pixels 1, preferably arranged in a matrix of pixel rows and pixel columns.

The pixel 1 comprises a N photodiodes PDi, for example, N island photodiodes PDi, N being an integer superior or equal to 2, and i being an integer having values in the range from 1 to N. In the example of the embodiment of Figure 1, N is equal to 2 and the pixel 1 comprises two photodiodes PD1 and PD2.

Each photodiode PDi of the pixel 1 has an electrode, or terminal, coupled, preferably connected, to a node IN1-2i of the pixel 1. Said in other words, the photodiode PD1 has a terminal, for example, its cathode, coupled, preferably connected, to the node IN1-21 of the pixel 1, the photodiode PD2 having a terminal, for example, its cathode, coupled, preferably connected, to the node IN1-22 of the pixel 1. Node IN1-i is said to be associated to the photodiode PDi. As an example, the other terminal, for example the anode, of each photodiode PDi is coupled, preferably connected, to a node 100 configured to receive a reference potential, for example the ground potential GND.

The pixel 1 further comprises an amplifier AMP1, the amplifier AMP1 being not referenced on Figure 1. The amplifier AMP1 is, for example, a capacitive transimpedance amplifier, CTIA. The amplifier AMP1 comprises, or, more precisely, is made of, a first part AMP1-1, which is common to all the photodiodes PDi of the pixel 1, and, for each photodiode PDi a second part AMP1-21 associated with the photodiode PDi. More precisely, in the example of Figure 1, the amplifier AMP1 comprises the second part AMP1-21 associated with the photodiode PD1, and the second part AMP1-22 associated with the photodiode PD2. Said in other words, the amplifier AMP1 comprises as much second part AMP1-21 as photodiodes PDi in the pixel 1, but only one part AMP1-1. Thus, the pixel 1 comprises N second parts AMP1-2i.

The first part AMP1-1 of the amplifier AMP1 comprises a metal-oxide-semiconductor, MOS, transistor T1. Transistor T1 is one of the two transistors of a differential pair of the amplifier AMP1.

The part AMP1-1 of amplifier AMP1 further comprises an output 102 of the amplifier AMP1. As an example, although not shown on Figure 1, the output 102 is coupled, for example connected, to an input of an analog-to-digital converter, ADC. The amplifier AMP1 and the ADC are, for example, part of a readout circuit of the pixel 1.

Preferably, all the second parts AMP1-21 of the amplifier are structurally identical to each other, although a given component of one these part AMP1-21 could have a value, for example a capacitance value and/or a dimension value, for example a channel length or width, different from that of the same component of another second part AMP1-21 of the amplifier AMP1.

Each second part AMP1-21 of the amplifier AMP1 comprises a MOS transistor T2i (T21, T22 in Figure 1). Transistor T2i of each second part AMP1-21 of the amplifier AMP1 is the other one of the two transistors of the differential pair of the amplifier AMP1. Thus, transistors T1 and T2i are of the same type among the P-channel (PMOS) and N-channel (NMOS) types. In the example of Figure 1, transistors T1 and T2i are NMOS transistors, although, in other examples not shown, transistors T1 and T2i are PMOS transistors.

In each part AMP1-21 of the amplifier AMP1, transistor T2i has its gate coupled, preferably connected, to the node IN1-2i associated with the photodiode PDi this second part is associated with.

Further, each second part AMP1-21 of the amplifier AMP1 comprises a switch IT1i (IT11, IT12 in Figure 1) and a switch IT2i (IT21, IT22 in Figure 1). In each part AMP1-21 of the amplifier AMP1, switches IT1i and IT2i are configured so that transistor T2i of this part AMP1-21 forms, with the transistor T1, the differential pair of the amplifier AMP1 when switches IT1i and IT2i of this part AMP1-21 are closed, or, said in other words, in the on-state. When switches IT1i and IT2i of this part AMP1-21 are open, or, said in other words, in the off-state, transistor T2i does not form, with transistor T1, the differential pair of the amplifier AMP1. Each switch IT1i, IT2i is for example implemented with at least one MOS transistor, for example, using the Complementary Metal Oxide Semiconductor, CMOS, technology.

In each part AMP1-21, the switch IT1i couples a source of the transistor T2i to the first part AMP1-1 of the amplifier AMP1. Said in other words, in each part AMP1-21, the switch IT1i is configured to selectively couples the source of the transistor T2i to the first part AMP1-1 of the amplifier AMP1. Thus, in each part AMP1-21, the switch IT1i is connected between the source of the transistor T2i and the part AMP1-1 of the amplifier AMP1. For example, in each part AMP1-21 of the amplifier AMP1, a first conduction terminal of the switch IT1i is coupled, preferably connected, to the part AMP1-1 of the amplifier AMP1, a second terminal of the switch IT1i being coupled, preferably connected, to the source of transistor T2i.

In each part AMP1-21, the switch IT2i couples a drain of the transistor T2i to the first part AMP1-1 of the amplifier AMP1. Said in other words, in each part AMP1-21, the switch IT2i is configured to selectively couples the drain of the transistor T2i to the first part AMP1-1 of the amplifier AMP1. Thus, in each part AMP1-21, the switch IT2i is connected between the drain of the transistor T2i and the part AMP1-1 of the amplifier AMP1. For example, in each part AMP1-21 of the amplifier AMP1, a first conduction terminal of the switch IT2i is coupled, preferably connected, to the part AMP1-1 of the amplifier AMP1, a second terminal of the switch IT2i being coupled, preferably connected, to the drain of transistor T2i.

More precisely, according to an embodiment, the first part AMP1-1 of the amplifier AMP1 comprises an intermediate node 104 of the differential pair of the amplifier AMP1, and a load stage LS of the differential pair of the amplifier AMP1. A source of the transistor T1 is coupled to node 104. A gate of transistor T1 is coupled, preferably connected, to an input IN1-1 of the amplifier AMP1. For example, input, or node, IN1-1 is configured to receive the ground potential GND. A drain of the transistor T1 is coupled, preferably connected, to the load stage LS, for example to a node 106 of the load stage LS. Thus, the switch IT1i of each second part AMP1-21 of the amplifier AMP1 is connected between the source of the corresponding transistor T2i and the intermediate node 104, that is, the source of the transistor T1. Further, the switch IT2i of each second part AMP1-21 of the amplifier AMP1 is connected between the drain of the corresponding transistor T2i and the load stage LS. For example, the switch IT2i of each second part AMP1-21 of the amplifier AMP1 is connected between the drain of the corresponding transistor T2i and a node 108 of the load stage LS.

As an example, the load stage LS of the differential pair of the amplifier AMP1 is an active load stage LS. In this case, the load stage LS, for example, comprises a current-mirror having one branch connected between node 106 and a node 110 configured to receive a first DC potential, and one branch connected between nodes 108 and 110. For example, the load stage LS comprises a MOS transistor T3 having a source connected to the node 110 and a drain connected to node 108 and to a gate of transistor T3, the load stage LS further comprising a MOS transistor T4 having a source connected to the node 110, a drain connected to node 106 and a gate connected to the gate of transistor T3. In the example of Figure 1, where transistors T1 and T2i are NMOS transistors, transistors T3 and T4 are, for example, PMOS transistors, and node 110 is configured to receive a supply potential Vdd.

In other examples not shown, the load stage LS is different from the one described above as an example. The implementation of other examples of load stage LS is within the capabilities of those skilled in the art.

As an example, the intermediate node 104 of the differential pair of the amplifier AMP1 is coupled to a node 112 configured to receive a second DC potential, the difference between potential on node 110 and potential on node 112 corresponding to a supply voltage of the amplifier AMP1. In the example of Figure 1, where transistors T1 and T2i are NMOS transistors, node 112 is, for example, configured to receive the ground potential GND.

The intermediate node 104 of the differential pair is coupled to node 112 by a bias circuit B, configured to bias the differential pair. In the example of Figure 1, the bias circuit B comprises an NMOS transistor T5 having a source coupled, preferably connected, to node 112, a drain coupled, preferably connected, to node 104, and a gate configured to receive a control potential, although other examples of bias circuit implementations are within the capabilities of those skilled in the art.

According to an embodiment, and as illustrated in Figure 1, the first part AMP1-1 of the amplifier AMP1 further comprises a switch IT4 and a switch IT5. Switch IT4 is connected between the source of transistor T1 and node 104. Switch IT5 is connected between the drain of transistor T1 and node 106. Switches IT4 and IT5 are configured to be maintained closed, or, said in other words, are dummy switches. Thus, when the switches IT1i and IT2i of a part AMP1-21 are closed, the influence of these switches on the differential pair is compensated by the influence of the dummy switches IT4 and IT5 on the differential pair.

In another embodiment not shown, the part AMP1-1 of amplifier AMP1 does not comprise the switches IT3 and IT4. In such an embodiment, the source of transistor T1 is preferably connected to node 104, the drain of transistor T1 being preferably connected to node 106.

As illustrated by Figure 1, the amplifier AMP1, and, more precisely, the part AMP1-1 of the amplifier AMP1, comprises a gain stage G, configured to couples the differential pair of the amplifier AMP1 to the output 102 of the amplifier AMP1. In the example where the load stage LS is an active load stage comprising a current-mirror, the gain stage G couples the node 106 to the output 102.

As an example, the gain stage G is of the Miller type. The gain stage comprises a transistor T5 having a gate coupled, preferably connected, to node 106, a drain coupled, preferably connected, to output 102, and a source coupled, preferably connected, to node 110, a Miller capacitor Cm being connected between the gate and the drain of the transistor T5. In this example where the node 110 receives the potential Vdd, the transistor T5 is a PMOS transistor. The gain stage G further comprises a transistor T6 having a gate configured to receive a control potential, a source coupled, preferably connected, to node 112, and a drain coupled, preferably connected, to output 102. In this example where the node 112 receives the potential GND, the transistor T6 is a NMOS transistor.

It will be in the capabilities of those skilled in the art to replace the gain stage G described above as an example, with another gain stage G, for example of the folded cascode type.

The differential pair T1, T2i, the load stage LS, the bias circuit B and the load stage of the amplifier AMP1 are part of an operational amplifier of the amplifier AMP1.

According to an embodiment, further to one transistor T2i, each part AMP1-21 of the amplifier AMP1 comprises one feedback loop FbLi of the amplifier AMP1 (Fbl1, FbL2 in Figure 1) .

In each second part AMP1-21 of the amplifier AMP1, the feedback loop FbLi has one end 116 connected to the node IN1-2i associated with the photodiode PDi the second part AMP1-2i is associated with. For example, the end 116 of the feedback loop FbLi of part AMP1-21 is connected to node IN1-21, the end 116 of the feedback loop FbL2 of part AMP1-22 being connected to node IN1-22.

According to one embodiment, the amplifier AMP1 comprises, for each feedback loop FbLi, a switch IT3i (IT31, IT32 in Figure 1) associated with the feedback loop FbLi. The switch IT3i couples another end 118 of the feedback loop FbLi to the output 102 of the amplifier AMP1. Said in other words, each feedback loop FbLi is associated with the switch IT3i, which is configured to selectively couples the end 118 of the feedback loop FbLi to the output 102 of the amplifier AMP1. Thus, for each feedback loop FbLi, the switch IT3i associated with the feedback loop FbLi is connected between the end 118 of the feedback loop FbLi and the output 102 of the amplifier AMP1. For each feedback loop FbLi, the switch IT3i is, for example, configured to be in the same state (closed or open) that the switches IT1i and IT2i of the second part AMP1-21 which comprises the feedback loop FbLi. As an example, each switch IT3i is implemented with at least one MOS transistor, for example, using the CMOS technology.

According to one embodiment, as illustrated by Figure 1, for each feedback loop FbLi, switch IT3i belongs to the part AMP1-21 which comprises the feedback loop FbLi. For example, the part AMP1-21 comprises the switch IT31 associated with the feedback loop FbLi, the part AMP1-22 comprising the switch IT32 associated with the feedback loop FbL2.

According to one embodiment, the amplifier AMP1 comprises, for each feedback loop FbLi, and further to the switch IT3i associated with the feedback loop FbLi, a switch IT0i (IT01, IT02 in Figure 1) associated with the feedback loop FbLi. For each feedback loop FbLi, as to the switch IT3i, the switch IT0i couples the end 118 of the feedback loop FbLi to the output 102 of the amplifier AMP1. All the switches belong to the part AMP1-1 of the amplifier AMP1. Thus, for each feedback loop FbLi, the corresponding switches IT3i and IT0i are serie-connected between the end 118 of the feedback loop FbLi and the output 102 of the amplifier AMP1. For each feedback loop FbLi, the switch IT0i associated with the feedback loop FbLi is, for example, configured to be in the same state (closed or open) that the switches IT1i, IT2i of the part AMP2-21 comprising the feedback loop FbLi. As an example, each switch IT0i is implemented with at least one MOS transistor, for example, using the CMOS technology. An advantage of this embodiment where each feedback loop FbLi is two switches IT3i and IT0i is that, when both switches IT3i and IT0i associated with a given feedback loop FbLi are open, the capacitance of the conductive wire connecting the switch IT3i with the switch IT0i is disconnected from the amplifier AMP1.

In the example of Figure 1, each switch IT3i of part AMP1-21 is connected between the end 118 of the feedback loop FbLi and a node 120i (1201, 1202 in Figure 1), the switch IT0i being connected between the node 120i and the output 102 of the amplifier AMP1. For example, in the example of Figure 1, the switch IT31, respectively IT32, is connected between the end 118 of the feedback loop FbLi, respectively FbL2, and a node 1201, respectively 1202, the switch IT01, respectively IT02 being connected between node 1201, respectively 1202, and the output 102 of the amplifier AMP1.

Although not shown on Figure 1, according to alternative embodiment, each feedback loop FbLi is associated only with the switch IT3i of the part AMP1-21 the feedback loop FbLi is associated with. Said in other words, the pixel 1 does not comprise the switches IT0i.

Although not shown on Figure 1, according to a further alternative embodiment, each feedback loop FbLi is associated only with the switch IT0i of the part AMP1-1 of the amplifier, the switch IT0i being connected between the end 118 of the corresponding feedback loop FbLi and the output 102 of the amplifier AMP1. Said in other words, the pixel 1 does not comprise the switches IT3i.

As an example, each feedback loop FbLi comprises a switch IT6 and a capacitive element Cfb parallel-connected between the ends 116 and 118 of the feedback loop FbLi.

According to one embodiment, the pixel 1 comprises a control circuit CTRL configured to control the switches IT1i, IT2i and IT3i and/or IT0i, and, for example, to maintain the switch IT4 and IT5 closed. The circuit CTRL is, for example, further configured to control the switches IT6.

According to one embodiment, each photodiode PDi belongs to only one group of photodiodes PDi among a plurality of groups of at least one photodiode PDi. Preferably, each photodiode PDi of a given groups is a photodiode of a corresponding given color channel of the pixel 1. Thus, the pixel 1 has a plurality of different color channels. Said in other words, the photodiode (s) PDi of a color channel are configured to receive light having wavelengths in a range of wavelengths, and the photodiode(s) PDi of another color channel are configured to receive light having wavelengths in another range of wavelengths. The circuit CTRL is, for example, configured to successively select each group of photodiode(s) PDi, and, for each selected group, to close the switches IT1i and IT2i of the part AMP1-21 associated with each photodiode PDi of the selected group, while opening the switches IT1i and IT2i of the other part(s) AMP1-21, that is, the switches IT1i and IT2i of each part AMP1-21 associated with a photodiode PDi of a non-selected group of photodiode(s) PDi.

For example, in the example of Figure 1 where N is equal to 2, photodiode PD1 belongs to a first color channel of the pixel 1 and photodiode PD2 belongs to a second color channel of the pixel 1. Said in other words, the photodiode PD1 is configured to receive light having wavelengths in a first range of wavelengths, the photodiode PD2 being configured to receive light having wavelengths in a second range of wavelengths, the first and second ranges of wavelengths being different from each other. In this example, when the first color channel is selected, the circuit CTRL is configured to close switches IT11, IT21, IT31 and IT01, while opening switches IT12, IT22, IT32 and IT02, and, when the second color channel is selected, the circuit CTRL is configured to close switches IT12, IT22, IT32 and IT02, while opening switches IT11, IT21, IT31 and IT01.

An advantage of this embodiment is that the part AMP1-1 of the amplifier AMP1, and, preferably an analog-to-digital converter connected to the output 102 of the amplifier AMP1, are shared between the different color channels of the pixel 1. This allows to increase the matching between the color channels, or, said in other words, to reduce the mismatch between the color channels.

According to another embodiment, all the photodiodes PDi belongs to same color channel, the pixel for example comprising at least one other photodiode not shown on Figure 1, which belongs to another color channel and is coupled to its own readout circuit. The circuit CTRL is, for example, configured to close all the switches IT1i, IT2i, IT3i, IT0i simultaneously.

A case where the pixel 1, and, more precisely, its control circuit CTRL, are configured so that the switches IT1i, IT2i, IT3i and IT0i associated with M photodiodes PDi, M being an integer superior or equal to 2, are closed simultaneously, while the switches IT1i, IT2i, IT3i and IT0i associated with the other photodiodes PDi are open, is considered. Preferably, in such a case, the dimensions of the M transistors T2i associated with the M photodiodes PDi are chosen so that the transistor equivalent to the parallel connection of these M transistors T2i has the same dimensions than those of transistor T1.

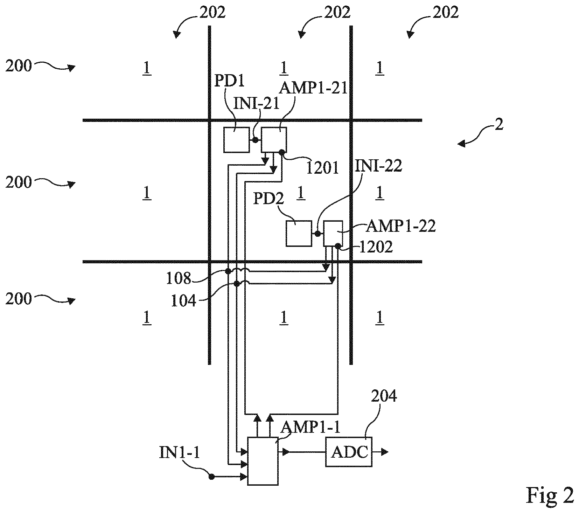

Figure 2 illustrates, in a very schematic manner, and under the form of blocks, an embodiment of a light sensor 2 comprising the pixel 1 of Figure 1.

For example, the sensor 2, for example an ambient light sensor, comprises a matrix of pixels 1 arranged in rows 200 and columns 202, only three rows 200 and three column 202 being represented, partially, on Figure 1, and only one complete pixel 1 being represented on Figure 1.

As shown only for the pixel 1 on the middle of Figure 2, each second part AMP1-21, AMP1-22 of the amplifier AMP1 (not referenced on Figure 2) is disposed close to the photodiode PD1, PD2 the second part is associated with. Further, the first part AMP1-1 of the amplifier AMP1 is disposed far from the photodiodes PD1 and PD2 of the pixel 1, for example on the bottom of the column 202 comprising the pixel.

According to an embodiment, each part AMP1-21 is disposed, preferably entirely disposed, close to the photodiode PDi this part AMP1-21 is associated with, for example at less than 50 µm of the photodiode PDi this part AMP1-21 is associated with.

According to an embodiment, each part transistor T2i is disposed close, preferably at less than 50 pm, to the photodiode PDi which is coupled, preferably connected, to the transistor T2i.

As an example, the output 102 of the amplifier AMP1 is coupled, for example connected, to an input of analog-to-digital converter 204.

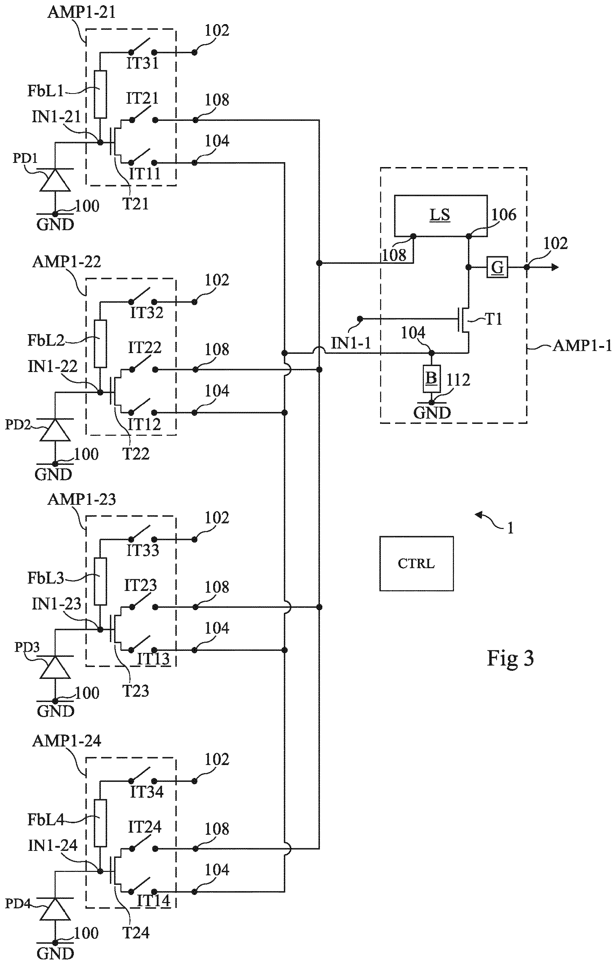

Figure 3 illustrates another example of the pixel 1. In the example of the embodiment of Figure 3, N is equal to 4. Thus, compared with the pixel 1 of Figure 1, the pixel of Figure 3 further comprises:
- a node IN1-23 and a node IN1-24,
- a photodiode PD3 and a photodiode PD4, the first electrode, in this example the cathode, of the photodiode PD3, respectively PD4, being coupled, preferably connected, to node IN1-23, respectively IN1-24,
- a second part AMP1-23 of the amplifier AMP1, the second part AMP1-23 being associated with the photodiode PD3 and comprising a transistor T23, a feedback loop FbL3 and switches IT13, IT23 and IT33,
- a second part AMP1-24 of the amplifier AMP1, the second part AMP1-24 being associated with the photodiode PD4 and comprising a transistor T24, a feedback loop FbL4 and switches IT14, IT24 and IT34.

Further, in the example of Figure 3, the pixel 1 does not comprise the switches IT0i, and nodes 120i are merged with the output 102 of the amplifier AMP1 (not referenced on Figure 3). However, it will be in the capabilities of those skilled in the art to adapt the pixel 1 of Figure 3 to the case where pixel 1 further comprises the switches IT0i, or to the case where the pixel 1 of Figure 3 does not comprise the switches IT3i but comprises the switches IT0i.

Further, in the example of Figure 3, the part AMP1-1 does not comprise the switches IT4 and IT5, although it will be the capabilities of those skilled in the art to add these switches, based on the functional and structural description of pixel 1 made in relation with Figure 1.

Further, in order to not surcharging Figure 3, the feedback loops FbLi, the load stage LS, the bias circuit B and the gain stage G are represented under the form of blocks.

In a first example, each photodiode PDi belongs to a different color channel of the pixel 1. Thus, the pixel 1 comprises four different color channels.

In a second example, the pixel 1 comprises two different color channels having each two photodiodes PDi. For example, a first color channel comprises photodiodes PD1 and PD2, and a second color channel comprise photodiodes PD3 and PD4.

In a third example, the pixel 1 comprises a first color channel having only one photodiode PDi, for example the photodiode PD1, and second color channel having the other photodiodes PDi, for example the photodiodes PD2, PD3 and PD4.

In a fourth example, the pixel 1 comprises a first color channel having one photodiode PDi, for example the photodiode PD1, a second color channel having one photodiode PDi, for example the photodiode PD2, and a third color channel having the other photodiodes PDi, for example the photodiodes PD3 and PD4.

In a fifth example, the pixel 1 comprises four color channel having each one of the photodiodes PDi.

Other examples of repartition of the photodiodes PDi in at least two groups, or color channels, are in the capabilities of those skilled in the art.

As in Figure 1, an advantage of the pixel 1 of Figure 2 is that part AMP1-1 of the amplifier AMP1 is shared by all the photodiodes PDi of the pixel 1, and that each part AMP1-2i, or, at least each transistor T2i, may be disposed close to the associated photodiode PDi, whereas the part AMP1-1 may be disposed far from the photodiodes PDi.

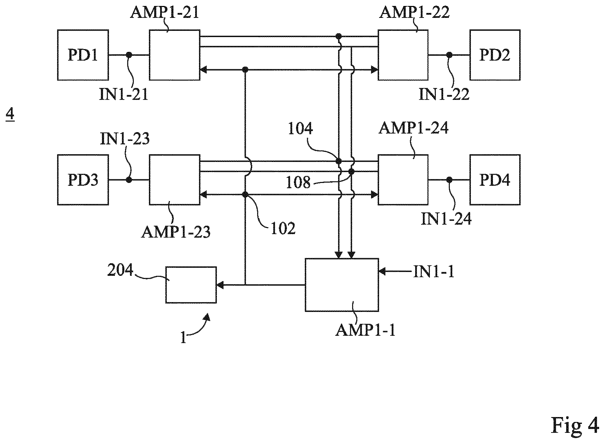

Figure 4 illustrates, in a very schematic manner, and under the form of blocks, an embodiment of a light sensor 4 comprising the pixel 1 of Figure 3.

For example, the sensor 4, for example an ambient light sensor, comprises a matrix of pixels 1 arranged in rows and columns, although only one pixel 1 is represented in Figure 4.

As shown on Figure 4, each second part AMP1-21 of the amplifier AMP1 (not referenced on Figure 4) is disposed close to the photodiode PDi the second part AMP1-21 is associated with. Further, the first part AMP1-1 of the amplifier AMP1 may be disposed far from the photodiodes PDi of the pixel 1, for example on the bottom of a column comprising the pixel 1.

According to an embodiment, each part AMP1-21 is disposed, preferably entirely disposed, close to the photodiode PDi this part AMP1-21 is associated with, for example at less than 50 µm of the photodiode PDi this part AMP1-21 is associated with.

According to an embodiment, each transistor T2i (Figure 3) is disposed close, preferably at less than 50 pm, to the photodiode PDi which is coupled, preferably connected, to the transistor T2i.

As an example, the output 102 of the amplifier AMP1 is coupled, for example connected, to an input of analog-to-digital converter 204.

In the embodiments and variants described above, it will be in the capabilities of those skilled in the art to change the value of N, such that the pixel 1 comprises only one color channel with all the N photodiodes PDi, or at least two different color channels, each color channel having one or a plurality of photodiodes PDi and a number of photodiodes PDi equal or different to the number of photodiodes PDi of another color channel.

It will be in the capabilities of those skilled in the art to arrange the photodiodes PDi of the different color channels of pixel 1 so that the pixel 1 has a common-centroid layout.

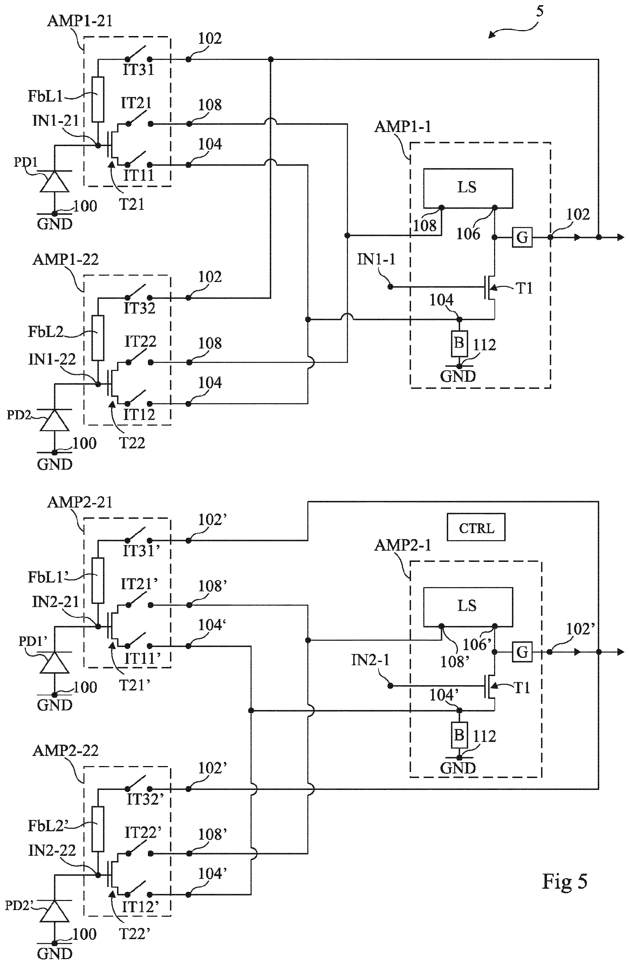

Figure 5 illustrates a further embodiment of a pixel 5 of a light sensor. Although not shown on Figure 5, the sensor, for example, an ambient light sensor, comprises a plurality of pixels 5, preferably arranged in a matrix of pixel rows and pixel columns.

The pixel 5 comprises many elements in common with the pixel 1 described in relation with Figures 1 to 4, and only the differences between pixel 5 and pixel 1 will be here emphasised. In particular, the pixel 5 comprises, as the pixel 1, N photodiodes PDi, the amplifier AMP1 (not referenced on Figure 5), and, thus, the part AMP1-1 of the amplifier AMP1, N nodes IN1-2i being each associated with a corresponding photodiode PDi, N parts AMP1-21 of the amplifier AMP1 being each associated with the corresponding photodiode PDi, and, preferably, the control circuit CTRL.

In the example of Figure 5, N is equal to 2, although it will be in the capabilities of those skilled in the art to increase the value of N. Thus, the pixel 5 comprises the photodiodes PD1 and PD2, the nodes IN1-21 and IN1-22 and the parts AMP1-21 and AMP1-22.

Further, in the example of Figure 5, the part AMP1-1 of the amplifier AMP1 does not comprise the switches IT0i, and nodes 120i are merged with the output 102 of the amplifier AMP1. However, it will be in the capabilities of those skilled in the art to adapt the pixel 5 to the case where the part AMP1-1 comprises the switches IT0i, or to the case where the parts AMP1-21 do not comprise the switches IT3i but the part AMP1-1 comprises the switches IT0i.

Further, in the example of Figure 5, the part AMP1-1 does not comprise the switches IT4 and IT5, although it will be the capabilities of those skilled in the art to add these switches, based on the functional and structural description of pixel 1 made above.

Further, in order to not surcharging Figure 5, the feedback loops FbLi (FbL1, FbL2), the load stage LS, the bias circuit B and the gain stage G of the amplifier AMP1 are represented under the form of blocks.

Further to the photodiodes PDi, the pixel 5 comprises K photodiodes PDj', K being an integer superior or equal to 2 and j being an integer having values in the range from 1 to K. Preferably, the photodiodes PDj' are island photodiodes.

In the example of the embodiment of Figure 5, K is equal to 2 and the pixel 5 comprises two photodiodes PD1' and PD2'.

Each photodiode PDj' of the pixel 5 has an electrode, or terminal, coupled, preferably connected, to a node IN2-2j of the pixel 5. Said in other words, the photodiode PD1' has a terminal, for example, its cathode, coupled, preferably connected, to the node IN2-21, the photodiode PD2' having a terminal, for example, its cathode, coupled, preferably connected, to the node IN2-22. Node IN2-2j is said to be associated to the photodiode PDj'. As an example, the other terminal, for example the anode, of each photodiode PDj' is coupled, preferably connected, to the node 100.

The pixel 5 further comprises an amplifier AMP2 (not referenced on Figure 5). The amplifier AMP2 is, for example, a capacitive transimpedance amplifier, CTIA. The amplifier AMP2 comprises, or, more precisely, is made of, a first part AMP2-1, which is common to all the photodiodes PDj', and, for each photodiode PDj', a second part AMP2-2j associated with the photodiode PDj'. Thus, the pixel 5 comprises K second parts AMP2-2j. More precisely, in the example of Figure 5, the amplifier AMP2 comprises the second part AMP2-21 associated with the photodiode PD1', and the second part AMP2-22 associated with the photodiode PD2'.

The first part AMP2-1 of the amplifier AMP2 is similar or identical to the first part AMP1-1 of the amplifier AMP1. However, nodes 102, 104, 106 and 108 of the part AMP1-1 correspond to respective nodes 102', 104', 106' and 108' in part AMP2-1. Thus, part AMP2-1 of the amplifier AMP2 comprises the nodes 102', 104', 106' and 108', a transistor T1, a load stage LS, a gain stage G and a bias circuit B, the interconnections of these elements the ones with the others being the same as those described in relation with Figures 1 to 4 for the respective elements 102, 104, 106, 106, T1, LS, G and B of the part AMP1-1 of amplifier AMP1.

Transistor T1 of part AMP2-1 is one of the two transistors of a differential pair of the amplifier AMP2.

Transistor T1 has a gate coupled, preferably connected, to an input IN2-1 of the amplifier AMP2. The input IN2-1 is, for example, configured to receive the ground potential GND.

As an example, although not shown on Figure 5, the output 102 is coupled, for example connected, to an input of a first analog-to-digital converter, the output 102' being coupled, for example connected, to an input of a second analog-to-digital converter. The amplifier AMP1 and the first converter are, for example, part of a readout circuit of the photodiodes PDi of pixel 5, the amplifier AMP2 and the second converter being, for example, part of a readout circuit of the photodiodes PDj' of pixel 5.

Preferably, all the second parts AMP2-2j of the amplifier are structurally identical to each other, although a given component of one these part AMP2-2j could have a value, for example a capacitance value, and/or a dimension, for example a channel length or width, different from those of the same component of another second part AMP2-2j.

Each second part AMP2-2j of the amplifier AMP2 comprises a MOS transistor T2j' (T21', T22' in Figure 5). Transistor T2j' of each second part AMP2-2j is the other one of the two transistors of the differential pair of the amplifier AMP2. Thus, transistors T1 and T2j' are of the same type among the P-channel and N-channel types. In the example of Figure 5, transistor T1 is a NMOS transistor, although, in other examples not shown, transistor T1 is a PMOS transistor.

In each part AMP2-2j of the amplifier AMP2, transistor T2j' has its gate coupled, preferably connected, to the node IN2-2j associated with the photodiode PDj'.

Further, each second part AMP2-2j of the amplifier AMP2 comprises a switch IT1j' (IT11', IT12' in Figure 5) and a switch IT2j' (IT21', IT22' in Figure 5). In each part AMP2-2j of the amplifier AMP2, switches IT1j' and IT2j' are configured so that transistor T2j' forms, with the transistor T1 of part AMP2-1, the differential pair of the amplifier AMP2 when switches IT1j' and IT2j' are closed. Each switch IT1j', IT2j' is, for example, implemented with at least one MOS transistor, for example, using the CMOS technology.

In each part AMP2-2j, the switch IT1j' couples a source of the transistor T2j' to the first part AMP2-1 of the amplifier AMP2, similarly to the switch IT1i which couples the source of transistor T2i to the part AMP1-1 of amplifier AMP1. Thus, in each part AMP2-21, the switch IT1j' is connected between the source of the transistor T2j' and the part AMP2-1 of the amplifier AMP2. For example, in each part AMP2-2j of the amplifier AMP2, a first conduction terminal of the switch IT1j' is coupled, preferably connected, to the part AMP2-1 of the amplifier AMP2, a second terminal of the switch IT1j' being coupled, preferably connected, to the source of transistor T2j'.

In each part AMP2-2j, the switch IT2j' couples a drain of the transistor T2j' to the first part AMP2-1 of the amplifier AMP2, similarly to the switch IT2i which couples the drain of the transistor T2i to the first part AMP1-1 of the amplifier AMP1. Thus, in each part AMP2-2j, the switch IT2j' is connected between the drain of the transistor T2j' and the part AMP2-1. For example, in each part AMP2-2j of the amplifier AMP2, a first conduction terminal of the switch IT2j' is coupled, preferably connected, to the part AMP2-1 of the amplifier AMP2, a second terminal of the switch IT2j' being coupled, preferably connected, to the drain of transistor T2j'.

More precisely, according to an embodiment, the switch IT1j' of each second part AMP2-2j of the amplifier AMP2 is connected between the source of the corresponding transistor T2j' and the intermediate node 104' of part AMP2-1 of amplifier AMP2, that is, the source of the transistor T1 of the amplifier AMP2, and the switch IT2j' of each second part AMP2-2j of the amplifier AMP2 is connected between the drain of the corresponding transistor T2j' and the node 108' of the amplifier AMP2.

In the embodiment of Figure 5, the source of transistor T1 of the amplifier AMP2 is connected to node 104', the drain of transistor T1 of the amplifier AMP2 being connected to node 106'. However, in another embodiment not shown, similarly to the embodiment where part AMP1-1 of amplifier AMP1 comprises switches IT4 and IT5, part AMP2-1 of amplifier AMP2 comprises a switch connected between the source of transistor T1 of part AMP2-1 and node 104', and a switch connected between the drain of transistor T1 of part AMP2-1 and the node 106'. These two switches are configured to be maintained closed, or, said in other words, are dummy switches.

The load stage LS of amplifier AMP2, the bias circuit B of amplifier AMP2, the load stage LS of amplifier AMP2 and the differential pair of amplifier AMP2 are part of an operational amplifier of the amplifier AMP2.

According to an embodiment, each part AMP2-2j comprises one feedback loop FbLj' (FbL1', FbL2' in Figure 5) of the amplifier AMP2. Although nor shown, preferably, each feedback loop FbLj' is structurally identical to the feedback loops FbLi. Further, each feedback loop FbLj' has one end 116 connected to the corresponding node IN2-2j', in a similar fashion that each feedback loop FbLi has one end 116 connected to the corresponding node IN1-2i.

According to one embodiment, the amplifier AMP2 comprises, for each feedback loop FbLj', a switch IT3j' (IT31', IT32' in Figure 2) associated with the feedback loop FbLj'. The switch IT3j' couples another end 118 of the feedback loop FbLj' to the output 102' of the amplifier AMP2, in a similar fashion that, for each feedback loop FbLi, the switch IT3i couples the end 118 of the feedback loop FbLi to the output 102 of the amplifier AMP1. Said in other words, each feedback loop FbLj' is associated with a corresponding switch IT3j'. The switch IT3j' associated with each feedback loop FbLj' is, for example, configured to be in the same state (closed or open) that the switches IT1j' and IT2j' of the second part AMP2-2j comprising the feedback loop FbLj'. As an example, each switch IT3j' is implemented with at least one MOS transistor, for example, using the CMOS technology. Each part AMP2-2j' comprises a corresponding switch IT3j'.

According to one embodiment not shown, the amplifier AMP2 comprises, for each feedback loop FbLj', and further to the switch IT3j', a supplementary switch associated with the feedback loop FbLj' and belonging to part AMP2-1 of the amplifier AMP2. For each feedback loop FbLj', this supplementary switch couples the end 118 of the feedback loop FbLj' to the output 102' of amplifier AMP2, in a similar fashion that, for each feedback loop FbLi, the switch IT0i couples the end 118 of the feedback loop FbLi to the output 102 of the amplifier AMP1. According to one embodiment, for each feedback loop FbLj', the supplementary switch is series-connected with the switch IT3j', between the end 118 of the feedback loop FbLj' and the output 102' of the amplifier AMP2. For each feedback loop FbLj', the supplementary switch is, for example, configured to be in the same state (closed or open) that the switches IT3j'. As an example, each supplementary switch is implemented with at least one MOS transistor, for example, using the CMOS technology. According to alternative embodiment, the pixel 5 does not comprise the switches IT3j'.

According to one embodiment, the control circuit CTRL is further configured to control the switches IT1j', IT2j' and the switches IT3j' and/or each supplementary switch coupling a feedback loop FbLj' to the output 102' of AMP2.

According to one embodiment, the pixel 5 comprises a first color channel comprising the photodiodes PDi and the amplifier AMP1, and a second color channel comprising the photodiodes PDj' and the amplifier AMP2. An advantage of this embodiment compared with an embodiment where all the photodiodes PDi of the first channel and all the photodiodes PDj' of the second channel would have share the same first part of the same amplifier is that the reading of the first color channel may be done simultaneously to the reading of the second color channel.

In the embodiment described in relation with Figure 5, although the pixel 5 comprises only two color channels having each its own amplifier AMP1 or AMP2, it will be in the capabilities of those skilled in the art to adapt the pixel 5 to embodiments where pixel 5 comprises more than two different color channels having each an amplifier similar to the amplifiers AMP1 and AMP2.

Further, although in the pixel 5 of Figure 5, each color channel comprises the same number of photodiodes, it will be in the capabilities of those skilled in the art to adapt the pixel 5 to a case where at least two color channels of the pixel 5 have a different number of photodiodes.

In the above-described examples of embodiments and variants, the transistors T1 and T2i, and, in the embodiments of Figure 5, the transistors T1' and T2j', are NMOS transistors. However, it will be in the capabilities of those skilled in the art to apply the described embodiments and variants to the case where these transistors are PMOS transistors, for example, by replacing transistors T3 and T4 (Figure 1) by NMOS transistors, and by permutating the potentials received by nodes 110 and 112.

In the above-described examples of embodiments and variants, the amplifiers AMP1 and AMP2 are capacitive transimpedance amplifier, CTIA, although the described embodiments and variants also apply to other amplifiers comprising an operational amplifier, for example to integrator amplifiers.

Various embodiments and variants have been described. Those skilled in the art will understand that certain features of these embodiments can be combined and other variants will readily occur to those skilled in the art. For example, in at least some of the feedback loop FbLi and/or Fblj', the capacitive element Cfb may be a capacitive element having a controllable capacitance value. Further, in a sensor comprising a plurality of pixels as described above, the pixels and their readout circuits may be comprised by a same and unique semiconductor layer, or, said in other words, a same and unique chip. Alternatively, the pixels may be comprised by of a first semiconductor layer, or, said in other words, a first chip, whereas the readout circuits of these pixels, excepting the second part of the amplifier of these readout circuits, may be comprised by a second semiconductor layer, or, said in other words, a second chip, the second chip being stacked on the first chip.

Finally, the practical implementation of the embodiments and variants described herein is within the capabilities of those skilled in the art based on the functional description provided hereinabove.

## Claims

1. A light sensor (2 ; 4) comprising a plurality of pixels (1 ; 5), each pixel comprising:
- N first nodes IN1-2i, N being an integer superior or equal to 2 and i being an integer having values in the range from 1 to N;
- N first photodiodes PDi, each first photodiode PDi having a terminal coupled to the first node IN1-2i; and
- a first amplifier comprising a first part (AMP1-1) and N second parts AMP2-11, the first part (AMP1-1) of the first amplifier being common to the N first photodiodes PDi and comprising an output (102) of the first amplifier and a first MOS transistor (T1) of a differential pair of the first amplifier, each of the N second parts AMP1-21 of the first amplifier being associated with a corresponding first photodiode PDi and comprising:
- a second MOS transistor T2i of the differential pair, the second transistor T2i having a gate coupled to the first node IN1-2i,
- a first switch IT1i for coupling a source of the second transistor T2i to the first part (AMP1-1) of the first amplifier,
- a second switch IT2i for coupling a drain of the second transistor T2i to the first part (AMP1-1) of the amplifier;
- a feedback loop FbLi having a first end (116) connected to the first node IN1-2i, and
- at least one third switch for coupling a second end (118) of the feedback loop FbLi to the output (102) of the first amplifier; and
a control circuit (CTRL) configured:
for each selected first photodiode PDi, to close the first switch IT1i, the second switch IT2i and the at least one third switch of the second part AMP1-21 of the first amplifier associated with said selected first photodiode PDi to electrically couple said second part AMP1-21 to the first part (AMP1-1) of the first amplifier; and
for each non-selected first photodiode PDi, to open the first switch IT1i, the second switch IT2i and the at least one third switch of the second part AMP1-21 of the first amplifier associated with said non-selected first photodiode PDi to electrically disconnect said second part AMP1-21 and the first part (AMP1-1) of the first amplifier.

2. The sensor according to claim 1, wherein, for each feedback loop FbLi, said at least one third switch comprises a first third switch IT3i comprised in the second part AMP1-21 of the first amplifier comprising said feedback loop FbLi.

3. The sensor according to claim 2, wherein, for each feedback loop FbLi, said at least one third switch comprises a second third switch IT0i comprised in the first part (AMP1-1) of the first amplifier and having a first conduction terminal connected to the output (102) of the first amplifier, the first third switch IT3i of each second part AMP1-21 of the first amplifier having a first conduction terminal connected to the second end (118) of the feedback loop FbLi, and a second conduction terminal connected to a second conduction terminal 102i of the second third switch IT0i.

4. The sensor according to any of claims 1 to 3, wherein, in each pixels (1 ; 5), the first part (AMP1-1) of the first amplifier comprises:
- an intermediate node (104) of the differential pair, the intermediate node (104) being coupled to a source of the first transistor (T1);
- a first input (IN1-1) of the first amplifier coupled to a gate of the first transistor (T1); and
- a load stage (LS) of the differential pair coupled to a drain (106) of the first transistor (T1),
the first switch IT1i of each second part AMP1-21 being connected between the source of the second transistor T2i of said second part AMP1-21 and the intermediate node (104), and
the second switch IT2i of each second part AMP1-21 being connected between the load stage (LS) and the drain of the second transistor T2i of said second part AMP1-21.

5. The sensor according to claim 4, wherein, in each pixel (1 ; 5), the first part (AMP1-1) of the first amplifier comprises a fourth switch (IT4) connected between the source of the first transistor (T1) and the intermediate node (104), and a fifth switch (IT5) connected between the drain of the first transistor (T1) and the load stage (LS), the fourth and fifth switches (IT4, IT5) being preferably configured to be maintained closed.

6. The sensor according to any of claims 1 to 5, wherein each pixel (5) further comprises:
- K second nodes IN2-2j, K being an integer superior or equal to 2 and j being an integer having values in the range from 1 to K;
- K second photodiodes PDj' having each a terminal coupled to the second node IN2-2i; and
- a second amplifier comprising a first part (AMP2-1) and K second parts AMP2-2j,
the first part (AMP2-1) of the second amplifier being common to all the second photodiodes PDj' and comprising an output (102') of the second amplifier and a first MOS transistor (T1) of a differential pair of the second amplifier,
each of the K second parts AMP2-2j of the second amplifier being associated with a corresponding second photodiode PDj' and comprising:
- a second MOS transistor T2j' of the differential pair of the second amplifier, the second transistor T2j' having a gate coupled to the second node IN2-2j;
- a first switch IT1j' for coupling a source of the second transistor T2j' to the first part (AMP2-1) of the second amplifier; and
- a second switch IT2j' for coupling a drain of the second transistor T2j' to the first part (AMP2-1) of the second amplifier.

7. The sensor according to claim 6, wherein, the second amplifier of each pixel further comprises, for each second photodiode PDj' of the pixel:
- a feedback loop FbLj' having a first end (116) connected to the second node IN2-2j, the second part AMP2-2j of the second amplifier comprising the feedback loop FbLj'; and
- at least one third switch for coupling a second end (118) of the feedback loop FbLj' to the output (102') of the second amplifier.

8. The sensor according to claim 7, wherein, for each feedback loop FbLj', said at least one third switch comprises a first third switch IT3j' comprised in the second part AMP2-2j of the second amplifier comprising said feedback loop FbLj'.

9. The sensor according to claim 8, wherein, for each feedback loop FbLj', said at least one third switch comprises a second third switch comprised in the first part (AMP2-1) of the second amplifier and having a first conduction terminal connected to the output (102') of the second amplifier, the first third switch IT3j' of the second part AMP2-2j of the second amplifier having a first conduction terminal connected to the second end (118) of the feedback loop FbLj', and a second conduction terminal connected to a second conduction terminal of said second third of the first part (AMP2-1) of the second amplifier.

10. The sensor according to any of claims 6 to 9, wherein, in each pixel (5), the first part (AMP2-1) of the second amplifier comprises:
- an intermediate node (104') of the differential pair of said first part (AMP2-1) of the second amplifier, said intermediate node (104') being coupled to a source of the first transistor (T1) of said first part (AMP2-1) of the second amplifier;
- a first input (102') of the second amplifier coupled to a gate of the first transistor (T1) of said first part (AMP2-1) of the second amplifier; and
- a load stage (LS) of the differential pair of said first part (AMP2-1) of the second amplifier, coupled to a drain (106) of the first transistor (T1) of said first part (AMP2-1) of the second amplifier,
the first switch IT1j' of the second part AMP2-2j of the second amplifier being connected between the source of the second transistor T2j' of said second part AMP2-2j of the second amplifier and said intermediate node (104') of said first part (AMP2-1) of the second amplifier,
the second switch IT2j' of the second part AMP2-2j of the second amplifier being connected between the drain of the second transistor T2j' of said second part AMP2-2j and said load stage (LS) of the second amplifier.

11. The sensor according to claim 10, wherein, in each pixel (5), the first part (AMP2-1) of the second amplifier comprises a fourth switch connected between the source of the first transistor (T1) of said first part (AMP2-1) of the second amplifier and the intermediate node (104') of said first part (AMP2-1) of the second amplifier, and a fifth switch connected between the drain of the first transistor (T1) of said first part (AMP2-1) of the second amplifier and the load stage of said first part (AMP2-1) of the second amplifier, said fourth and fifth switches being preferably configured to be maintained closed.

12. The sensor according to any of claims 1 to 5, wherein, in each pixel (1), each first photodiode PDi belongs to only one group among several groups each comprising at least one of the first photodiodes PDi, and the control circuit (CTRL) is configurated for:
- successively select each of the several groups;
- for each first photodiode PDi of the selected group, close the first switch IT1i, the second switch IT2i and the at least one third switch of the second part AMP1-21 associated with said first photodiode PDi for reading said first photodiode PDi; and
- for each first photodiode PDi of the non-selected group(s), open the first switch IT1i, thesecond switch IT2i and the at least one third switch of the second part AMP1-2i associated with said first photodiode PDi.

13. The sensor according to any of claims 1 to 12, wherein each feedback loop comprises a capacitive element (Cfb) and a switch (IT6) parallel-connected between the first and second ends (116, 118) of said feedback loop.

14. The sensor according to any of claims 1 to 13, wherein, in each pixel (1, 5), the second transistor (T21, T22, T23, T24, T21', T22') of each second part (AMP1-21, AMP1-22, AMP1-23, AMP1-24, AMP2-21, AMP2-22) is entirely disposed at less than 50 µm from the photodiode (PD1, PD2, PD3, PD4, PD1', PD2') said second part is associated with.

15. A method implemented in a light sensor (2; 4) according to any of claims 1 to 14, wherein reading at least one first photodiode PDi of a pixel (1; 5) selected among the first photodiodes PDi of the pixel comprises:
for each selected first photodiode PDi, closing the first switch IT1i, the second switch IT2i and the at least one third switch of the second part AMP1-21 of the first amplifier associated with said selected first photodiode PDi to electrically couple said second part AMP1-21 to the first part (AMP1-1) of the first amplifier; and
for each non-selected first photodiode PDi, opening the first switch IT1i , the second switch IT2i and the at least one third switch of the second part AMP1-21 of the first amplifier associated with said non-selected first photodiode PDi to electrically disconnect said second part AMP1-21 and the first part (AMP1-1) of the first amplifier.

## Patentansprüche

1. Ein Lichtsensor (2; 4), der eine Vielzahl von Pixeln (1; 5) aufweist, wobei jedes Pixel Folgendes aufweist:
- N erste Knoten IN1-2i, wobei N eine ganze Zahl größer oder gleich 2 ist und i eine ganze Zahl mit Werten im Bereich von 1 bis N ist;
- N erste Fotodioden PDi, wobei jede erste Fotodiode PDi einen Anschluss aufweist, der mit dem ersten Knoten IN1-2i gekoppelt ist; und
- einen ersten Verstärker, der einen ersten Teil (AMP1-1) und N zweite Teile AMP2-1i aufweist, wobei der erste Teil (AMP1-1) des ersten Verstärkers den N ersten Fotodioden PDi gemeinsam ist und einen Ausgang (102) des ersten Verstärkers und einen ersten MOS-Transistor (T1) eines differentiellen Paares des ersten Verstärkers aufweist, wobei jeder der N zweiten Teile AMP1-2i des ersten Verstärkers mit einer entsprechenden ersten Fotodiode PDi verbunden ist und Folgendes aufweist:
- einen zweiten MOS-Transistor T2i des differentiellen Paares, wobei der zweite Transistor T2i ein Gate aufweist, das mit dem ersten Knoten IN1-2i gekoppelt ist,
- einen ersten Schalter IT1i zum Koppeln einer Source des zweiten Transistors T2i mit dem ersten Teil (AMP1-1) des ersten Verstärkers,
- einen zweiten Schalter IT2i zum Koppeln eines Drains des zweiten Transistors T2i mit dem ersten Teil (AMP1-1) des Verstärkers;
- eine Rückkopplungsschleife FbLi mit einem ersten Ende (116), das mit dem ersten Knoten IN1-2i verbunden ist, und
- wenigstens einen dritten Schalter zum Koppeln eines zweiten Endes (118) der Rückkopplungsschleife FbLi mit dem Ausgang (102) des ersten Verstärkers; und
eine Steuerschaltung (CTRL), die konfiguriert ist:
für jede ausgewählte erste Fotodiode PDi, den ersten Schalter IT1i, den zweiten Schalter IT2i und den mindestens einen dritten Schalter des zweiten Teils AMP1-2i des ersten Verstärkers zu schließen, der mit der ausgewählten ersten Fotodiode PDi verknüpft ist, um den zweiten Teil AMP1-2i elektrisch mit dem ersten Teil (AMP1-1) des ersten Verstärkers zu koppeln; und
für jede nicht ausgewählte erste Fotodiode PDi den ersten Schalter IT1i, den zweiten Schalter IT2i und den wenigstens einen dritten Schalter des zweiten Teils AMP1-2i des ersten Verstärkers zu öffnen, der mit der nicht ausgewählten ersten Fotodiode PDi verbunden ist, um den zweiten Teil AMP1-2i und den ersten Teil (AMP1-1) des ersten Verstärkers elektrisch zu trennen.

2. Der Sensor nach Anspruch 1, wobei für jede Rückkopplungsschleife FbLi der wenigstens eine dritte Schalter einen ersten dritten Schalter IT3i aufweist, der in dem zweiten Teil AMP1-2i des ersten Verstärkers enthalten ist, der die Rückkopplungsschleife FbLi aufweist.

3. Der Sensor nach Anspruch 2, wobei für jede Rückkopplungsschleife FbLi der wenigstens eine dritte Schalter einen zweiten dritten Schalter IT0i aufweist, der in dem ersten Teil (AMP1-1) des ersten Verstärkers enthalten ist und einen ersten Leitungsanschluss hat, der mit dem Ausgang (102) des ersten Verstärkers verbunden ist, wobei der erste dritte Schalter IT3i jedes zweiten Teils AMP1-2i des ersten Verstärkers einen ersten Leitungsanschluss hat, der mit dem zweiten Ende (118) der Rückkopplungsschleife FbLi verbunden ist, und einen zweiten Leitungsanschluss, der mit einem zweiten Leitungsanschluss 102i des zweiten dritten Schalters IT0i verbunden ist.

4. Der Sensor nach einem der Ansprüche 1 bis 3, wobei in jedem Pixel (1; 5) der erste Teil (AMP1-1) des ersten Verstärkers Folgendes aufweist:
- einen Zwischenknoten (104) des differentiellen Paares, wobei der Zwischenknoten (104) mit einer Source des ersten Transistors (T1) gekoppelt ist;
- einen ersten Eingang (IN1-1) des ersten Verstärkers, der mit einem Gate des ersten Transistors (T1) gekoppelt ist; und
- eine Laststufe (LS) des differentiellen Paares, die mit einem Drain (106) des ersten Transistors (T1) gekoppelt ist,
wobei der erste Schalter IT1i jedes zweiten Teils AMP1-2i zwischen der Source des zweiten Transistors T2i des zweiten Teils AMP1-2i und dem Zwischenknoten (104) angeschlossen ist, und
wobei der zweite Schalter IT2i jedes zweiten Teils AMP1-2i zwischen der Laststufe (LS) und dem Drain des zweiten Transistors T2i des zweiten Teils AMP1-2i angeschlossen ist.

5. Der Sensor nach Anspruch 4, wobei in jedem Pixel (1; 5) der erste Teil (AMP1-1) des ersten Verstärkers einen vierten Schalter (IT4) aufweist, der zwischen der Source des ersten Transistors (T1) und dem Zwischenknoten (104) angeschlossen ist, und einen fünften Schalter (IT5), der zwischen dem Drain des ersten Transistors (T1) und der Laststufe (LS) angeschlossen ist, wobei der vierte und fünfte Schalter (IT4, IT5) vorzugsweise konfiguriert sind, um geschlossen gehalten zu werden.

6. Der Sensor nach einem der Ansprüche 1 bis 5, wobei jedes Pixel (5) ferner Folgendes aufweist:
- K zweite Knoten IN2-2j, wobei K eine ganze Zahl größer oder gleich 2 ist und j eine ganze Zahl mit Werten im Bereich von 1 bis K ist;
- K zweite Fotodioden PDj', die jeweils einen Anschluss haben, der mit dem zweiten Knoten IN2-2i gekoppelt ist; und
- einen zweiten Verstärker, der einen ersten Teil (AMP2-1) und K zweite Teile AM P2-2j aufweist,
wobei der erste Teil (AMP2-1) des zweiten Verstärkers allen zweiten Fotodioden PDj' gemeinsam ist und einen Ausgang (102') des zweiten Verstärkers und einen ersten MOS-Transistor (T1) eines differentiellen Paares des zweiten Verstärkers aufweist,
wobei jeder der K zweiten Teile AMP2-2j des zweiten Verstärkers mit einer entsprechenden zweiten Fotodiode PDj' verknüpft ist und Folgendes aufweist
- einen zweiten MOS-Transistor T2j' des differentiellen Paares des zweiten Verstärkers, wobei der zweite Transistor T2j' ein Gate aufweist, das mit dem zweiten Knoten IN2-2j gekoppelt ist;
- einen ersten Schalter IT1j' zum Koppeln einer Source des zweiten Transistors T2j' mit dem ersten Teil (AMP2-1) des zweiten Verstärkers; und
- einen zweiten Schalter IT2j' zum Koppeln eines Drain des zweiten Transistors T2j' mit dem ersten Teil (AMP2-1) des zweiten Verstärkers.

7. Der Sensor nach Anspruch 6, wobei der zweite Verstärker jedes Pixels ferner für jede zweite Fotodiode PDj' des Pixels Folgendes aufweist
- eine Rückkopplungsschleife FbLj', die ein erstes Ende (116) hat, das mit dem zweiten Knoten IN2-2j verbunden ist, wobei der zweite Teil AMP2-2j des zweiten Verstärkers die Rückkopplungsschleife FbLj' aufweist, und
- wenigstens einen dritten Schalter zum Koppeln eines zweiten Endes (118) der Rückkopplungsschleife FbLj' mit dem Ausgang (102') des zweiten Verstärkers.

8. Der Sensor nach Anspruch 7, wobei für jede Rückkopplungsschleife FbLj' der wenigstens eine dritte Schalter einen ersten dritten Schalter IT3j' aufweist, der in dem zweiten Teil AMP2-2j des zweiten Verstärkers enthalten ist, der die Rückkopplungsschleife FbLj' aufweist.

9. Der Sensor nach Anspruch 8, wobei für jede Rückkopplungsschleife FbLj' der wenigstens eine dritte Schalter einen zweiten dritten Schalter aufweist, der in dem ersten Teil (AMP2-1) des zweiten Verstärkers enthalten ist und einen ersten Leitungsanschluss hat, der mit dem Ausgang (102') des zweiten Verstärkers verbunden ist, wobei der erste dritte Schalter IT3j' des zweiten Teils AMP2-2j des zweiten Verstärkers einen ersten Leitungsanschluss hat, der mit dem zweiten Ende (118) der Rückkopplungsschleife FbLj' verbunden ist, und einen zweiten Leitungsanschluss, der mit einem zweiten Leitungsanschluss des zweiten Drittels des ersten Teils (AMP2-1) des zweiten Verstärkers verbunden ist.

10. Der Sensor nach einem der Ansprüche 6 bis 9, wobei in jedem Pixel (5) der erste Teil (AMP2-1) des zweiten Verstärkers Folgendes aufweist:
- einen Zwischenknoten (104') des differentiellen Paares des ersten Teils (AMP2-1) des zweiten Verstärkers, wobei der Zwischenknoten (104') mit einer Source des ersten Transistors (T1) des ersten Teils (AMP2-1) des zweiten Verstärkers gekoppelt ist;
- einen ersten Eingang (102') des zweiten Verstärkers, der mit einem Gate des ersten Transistors (T1) des ersten Teils (AMP2-1) des zweiten Verstärkers gekoppelt ist; und
- eine Laststufe (LS) des differentiellen Paares des ersten Teils (AMP2-1) des zweiten Verstärkers, die mit einem Drain (106) des ersten Transistors (T1) des ersten Teils (AMP2-1) des zweiten Verstärkers gekoppelt ist,
wobei der erste Schalter IT1j' des zweiten Teils AMP2-2j des zweiten Verstärkers zwischen der Source des zweiten Transistors T2j' des zweiten Teils AMP2-2j des zweiten Verstärkers und dem Zwischenknoten (104') des ersten Teils (AMP2-1) des zweiten Verstärkers verbunden ist,
wobei der zweite Schalter IT2j' des zweiten Teils AMP2-2j des zweiten Verstärkers zwischen dem Drain des zweiten Transistors T2j' des zweiten Teils AMP2-2j und der Laststufe (LS) des zweiten Verstärkers verbunden ist.

11. Der Sensor nach Anspruch 10, wobei in jedem Pixel (5) der erste Teil (AMP2-1) des zweiten Verstärkers einen vierten Schalter aufweist, der zwischen der Source des ersten Transistors (T1) des ersten Teils (AMP2-1) des zweiten Verstärkers und dem Zwischenknoten (104') des ersten Teils (AMP2-1) des zweiten Verstärkers verbunden ist, und einem fünften Schalter, der zwischen dem Drain des ersten Transistors (T1) des ersten Teils (AMP2-1) des zweiten Verstärkers und der Laststufe des ersten Teils (AMP2-1) des zweiten Verstärkers verbunden ist, wobei der vierte und fünfte Schalter vorzugsweise konfiguriert sind, um geschlossen gehalten zu werden.

12. Der Sensor nach einem der Ansprüche 1 bis 5, wobei in jedem Pixel (1) jede erste Fotodiode PDi nur zu einer Gruppe unter mehreren Gruppen gehört, die jeweils wenigstens eine der ersten Fotodioden PDi aufweisen, und wobei die Steuerschaltung (CTRL) konfiguriert ist, zum:
- nacheinander Auswählen jeder der mehreren Gruppen;
- für jede erste Fotodiode PDi der ausgewählten Gruppe, Schließen des ersten Schalters IT1i, des zweiten Schalters IT2i und des wenigstens einen dritten Schalters des zweiten Teils AMP1-2i, der mit der genannten ersten Fotodiode PDi verknüpft ist, um die genannte erste Fotodiode PDi zu lesen; und
- für jede erste Fotodiode PDi der nicht ausgewählten Gruppe(n), Öffnen des ersten Schalters IT1i, des zweiten Schalters IT2i und des wenigstens einen dritten Schalters des zweiten Teils AMP1-2i, der mit der ersten Fotodiode PDi verknüpft ist.

13. Der Sensor nach einem der Ansprüche 1 bis 12, wobei jede Rückkopplungsschleife ein kapazitives Element (Cfb) und einen Schalter (IT6) aufweist, der zwischen dem ersten und zweiten Ende (116, 118) der Rückkopplungsschleife parallel geschaltet ist.

14. Der Sensor nach einem der Ansprüche 1 bis 13, wobei in jedem Pixel (1, 5) der zweite Transistor (T21, T22, T23, T24, T21', T22') jedes zweiten Teils (AMP1-21, AMP1-22, AMP1-23, AMP1-24, AMP2-21, AMP2-22) vollständig in einem Abstand von weniger als 50 µm von der Fotodiode (PD1, PD2, PD3, PD4, PD1', PD2') angeordnet ist, die mit dem zweiten Teil verknüpft ist.

15. Ein Verfahren, das in einem Lichtsensor (2; 4) nach einem der Ansprüche 1 bis 14 implementiert ist, wobei das Lesen wenigstens einer ersten Fotodiode PDi eines Pixels (1; 5), die unter den ersten Fotodioden PDi des Pixels ausgewählt wird, Folgendes aufweist:
für jede ausgewählte erste Fotodiode PDi, Schließen des ersten Schalters IT1i, des zweiten Schalters IT2i und des wenigstens einen dritten Schalters des zweiten Teils AMP1-2i des ersten Verstärkers, der mit der ausgewählten ersten Fotodiode PDi verknüpft ist, um den zweiten Teil AMP1-2i elektrisch mit dem ersten Teil (AMP1-1) des ersten Verstärkers zu koppeln; und
für jede nicht ausgewählte erste Fotodiode PDi, Öffnen des ersten Schalters IT1i, des zweiten Schalters IT2i und des wenigstens einen dritten Schalters des zweiten Teils AMP1-2i des ersten Verstärkers, der mit der nicht ausgewählten ersten Fotodiode PDi verknüpft ist, um den zweiten Teil AMP1-2i und den ersten Teil (AMP1-1) des ersten Verstärkers elektrisch zu trennen.

## Revendications

1. Capteur de lumière (2 ; 4) comprenant une pluralité de pixels (1 ; 5), chaque pixel comprenant :
- N premier noeud IN1-21, N étant un entier supérieur ou égal à 2 et i étant un entier ayant des valeurs dans la plage allant de 1 à N ;
- N premières photodiodes PDi, chaque première photodiode PDi ayant une borne reliée au premier noeud IN1-21 ; et
- un premier amplificateur comprenant une première partie (AMP1-1) et N deuxièmes parties AMP2-1i, la première partie (AMP1-1) du premier amplificateur étant commune aux N premières photodiodes PDi et comprenant une sortie (102) du premier amplificateur et un premier transistor MOS (T1) d'une paire différentielle du premier amplificateur, chacune des N deuxièmes parties AMP1-21 du premier amplificateur étant associée à une première photodiode PDi correspondante et comprenant :
- un deuxième transistor MOS T2i de la paire différentielle, le deuxième transistor T2i ayant une grille reliée au premier noeud IN1-21,
- un premier commutateur IT1i destiné à relier une source du deuxième transistor T2i à la première partie (AMP1-1) du premier amplificateur,
- un deuxième commutateur IT2i destiné à relier un drain du deuxième transistor T2i à la première partie (AMP1-1) de l'amplificateur ;
- une boucle de rétroaction FbLi ayant une première extrémité (116) connectée au premier noeud IN1-21, et
- au moins un troisième commutateur destiné à relier une deuxième extrémité (118) de la boucle de rétroaction FbLi à la sortie (102) du premier amplificateur ; et
un circuit de commande (CTRL) configuré:
pour chaque première photodiode PDi sélectionnée, pour fermer le premier commutateur IT1i, le deuxième commutateur IT2i et l'au moins un troisième commutateur de la deuxième partie AMP1-2i du premier amplificateur associée à ladite première photodiode PDi sélectionnée pour relier électriquement ladite deuxième partie AMP1-21 à la première partie (AMP1-1) du premier amplificateur ; et
pour chaque première photodiode PDi non sélectionnée, pour ouvrir le premier commutateur IT1i, le deuxième commutateur IT2i et l'au moins un troisième commutateur de la deuxième partie AMP1-21 du premier amplificateur associée à ladite première photodiode PDi non sélectionnée pour déconnecter électriquement ladite deuxième partie AMP1-21 de la première partie (AMP1-1) du premier amplificateur.

2. Capteur selon la revendication 1, dans lequel, pour chaque boucle de rétroaction FbLi, ledit au moins un troisième commutateur comprend un premier troisième commutateur IT3i compris dans la deuxième partie AMP1-21 du premier amplificateur comprenant ladite boucle de rétroaction FbLi.

3. Capteur selon la revendication 2 dans lequel, pour chaque boucle de rétroaction FbLi, ledit au moins un troisième commutateur comprend un deuxième troisième commutateur IT0i compris dans la première partie (AMP1-1) du premier amplificateur et ayant une première borne de conduction connectée à la sortie (102) du premier amplificateur, le premier troisième commutateur IT3i de chaque deuxième partie AMP1-21 du premier amplificateur ayant une première borne de conduction connectée à la deuxième extrémité (118) de la boucle de rétroaction FbLi, et une deuxième borne de conduction connectée à une deuxième borne de conduction 102i du deuxième troisième commutateur IT0i.

4. Capteur selon l'une quelconque des revendications 1 à 3, dans lequel, dans chaque pixel (1 ; 5), la première partie (AMP1-1) du premier amplificateur comprend :
- un noeud intermédiaire (104) de la paire différentielle, le noeud intermédiaire (104) étant relié à une source du premier transistor (T1) ;
- une première entrée (IN1-1) du premier amplificateur reliée à une grille du premier transistor (T1) ; et
- un étage de charge (LS) de la paire différentielle relié à un drain (106) du premier transistor (T1),
le premier commutateur IT1i de chaque deuxième partie AMP1-21 étant connecté entre la source du deuxième transistor T2i de ladite deuxième partie AMP1-2i et le noeud intermédiaire (104), et
le deuxième commutateur IT2i de chaque deuxième partie AMP1-21 étant connecté entre l'étage de charge (LS) et le drain du deuxième transistor T2i de ladite deuxième partie AMP1-21.

5. Capteur selon la revendication 4, dans lequel, dans chaque pixel (1 ; 5), la première partie (AMP1-1) du premier amplificateur comprend un quatrième commutateur (IT4) connecté entre la source du premier transistor (T1) et le noeud intermédiaire (104), et un cinquième commutateur (IT5) connecté entre le drain du premier transistor (T1) et l'étage de charge (LS), les quatrième et cinquième commutateurs (IT4, IT5) étant de préférence configurés pour être maintenus fermés.

6. Capteur selon l'une quelconque des revendications 1 à 5, dans lequel chaque pixel (5) comprend en outre :
- K deuxièmes noeuds IN2-2j, K étant un entier supérieur ou égal à 2 et j étant un entier ayant des valeurs dans la plage allant de 1 à K ;
- K deuxièmes photodiodes PDj' ayant chacune une borne reliée au deuxième noeud IN2-2i ; et
- un deuxième amplificateur comprenant une première partie (AMP2-1) et K deuxièmes parties AMP2-2j,
la première partie (AMP2-1) du deuxième amplificateur étant commune à toutes les deuxièmes photodiodes PDj' et comprenant une sortie (102') du deuxième amplificateur et un premier transistor MOS (T1) d'une paire différentielle du deuxième amplificateur,
chacune des K deuxièmes parties AMP2-2j du deuxième amplificateur étant associée à une deuxième photodiode PDj' correspondante et comprenant :
- un deuxième transistor MOS T2j' de la paire différentielle du deuxième amplificateur, le deuxième transistor T2j' ayant une grille reliée au deuxième noeud IN2-2j ;
- un premier commutateur IT1j' destiné à relier une source du deuxième transistor T2j' à la première partie (AMP2-1) du deuxième amplificateur ; et
- un deuxième commutateur IT2j' destiné à relier un drain du deuxième transistor T2j' à la première partie (AMP2-1) du deuxième amplificateur.

7. Capteur selon la revendication 6, dans lequel le deuxième amplificateur de chaque pixel comprend en outre, pour chaque deuxième photodiode PDj' du pixel :
- une boucle de rétroaction FbLj' ayant une première extrémité (116) connectée au deuxième noeud IN2-2j, la deuxième partie AMP2-2j du deuxième amplificateur comprenant la boucle de rétroaction FbLj' ; et
- au moins un troisième commutateur destiné à relier une deuxième extrémité (118) de la boucle de rétroaction FbLj' à la sortie (102') du deuxième amplificateur.

8. Capteur selon la revendication 7, dans lequel, pour chaque boucle de rétroaction FbLj', ledit au moins un troisième commutateur comprend un premier troisième commutateur IT3j' compris dans la deuxième partie AMP2-2j du deuxième amplificateur comprenant ladite boucle de rétroaction FbLj'.

9. Capteur selon la revendication 8, dans lequel, pour chaque boucle de rétroaction FbLj', ledit au moins un troisième commutateur comprend un deuxième troisième commutateur compris dans la première partie (AMP2-1) du deuxième amplificateur et ayant une première borne de conduction connectée à la sortie (102') du deuxième amplificateur, le premier troisième commutateur IT3j' de la deuxième partie AMP2-2j du deuxième amplificateur ayant une première borne de conduction connectée à la deuxième extrémité (118) de la boucle de rétroaction FbLj', et une deuxième borne de conduction connectée à une deuxième borne de conduction dudit deuxième troisième de la première partie (AMP2-1) du deuxième amplificateur.

10. Capteur selon l'une quelconque des revendications 6 à 9, dans lequel, dans chaque pixel (5), la première partie (AMP2-1) du deuxième amplificateur comprend :
- un noeud intermédiaire (104') de la paire différentielle de ladite première partie (AMP2-1) du deuxième amplificateur, ledit noeud intermédiaire (104') étant relié à une source du premier transistor (T1) de ladite première partie (AMP2-1) du deuxième amplificateur ;
- une première entrée (102') du deuxième amplificateur reliée à une grille du premier transistor (T1) de ladite première partie (AMP2-1) du deuxième amplificateur ; et
- un étage de charge (LS) de la paire différentielle de ladite première partie (AMP2-1) du deuxième amplificateur, relié à un drain (106) du premier transistor (T1) de ladite première partie (AMP2-1) du deuxième amplificateur,
le premier commutateur IT1j' de la deuxième partie AMP2-2j du deuxième amplificateur étant connecté entre la source du deuxième transistor T2j' de ladite deuxième partie AMP2-2j du deuxième amplificateur et ledit noeud intermédiaire (104') de ladite première partie (AMP2-1) du deuxième amplificateur,
le deuxième commutateur IT2j' de la deuxième partie AMP2-2j du deuxième amplificateur étant connecté entre le drain du deuxième transistor T2j' de ladite la deuxième partie AMP2-2j et ledit étage de charge (LS) du deuxième amplificateur.

11. Capteur selon la revendication 10, dans lequel, dans chaque pixel (5), la première partie (AMP2-1) du deuxième amplificateur comprend un quatrième commutateur connecté entre la source du premier transistor (T1) de ladite première partie (AMP2-1) du deuxième amplificateur et le noeud intermédiaire (104') de ladite première partie (AMP2-1) du deuxième amplificateur, et un cinquième commutateur connecté entre le drain du premier transistor (T1) de ladite première partie (AMP2-1) du deuxième amplificateur et l'étage de charge de ladite première partie (AMP2-1) du deuxième amplificateur, lesdits quatrième et cinquième commutateurs étant de préférence configurés pour être maintenu fermés.

12. Capteur selon l'une des revendications 1 à 5, dans lequel, dans chaque pixel (1), chaque première photodiode PDi appartient à un seul groupe parmi plusieurs groupes comprenant chacun au moins une des premières photodiodes PDi, et le circuit de commande (CTRL) est configuré pour :
- la sélection successive de chacun des plusieurs groupes ;
- pour chaque première photodiode PDi du groupe sélectionné, fermer le premier commutateur IT1i, le deuxième commutateur IT2i et l'au moins un troisième commutateur de la deuxième partie AMP1-21 associée à ladite première photodiode PDi, pour lire ladite première photodiode PDi ; et
- pour chaque première photodiode PDi du ou des groupes non sélectionnés, ouvrir le premier commutateur IT1i, le deuxième commutateur IT2i et l'au moins un troisième commutateur de la deuxième partie AMP1-21 associée à ladite première photodiode PDi.

13. Capteur selon l'une quelconque des revendications 1 à 12, dans lequel chaque boucle de rétroaction comprend un élément capacitif (Cfb) et un commutateur (IT6) connecté en parallèle entre les première et deuxième extrémités (116, 118) de ladite boucle de rétroaction.

14. Capteur selon l'une quelconque des revendications 1 à 13, dans lequel, dans chaque pixel (1, 5), le deuxième transistor (T21, T22, T23, T24, T21', T22') de chaque deuxième partie (AMP1-21, AMP1-22, AMP1-23, AMP1-24, AMP2-21, AMP2-22) est entièrement disposée à moins de 50 um de la photodiode (PD1, PD2, PD3, PD4, PD1', PD2'), avec laquelle ladite deuxième partie est associée.

15. Procédé mis en œuvre dans un capteur de lumière (2 ; 4) selon l'une quelconque des revendications 1 à 14, dans lequel la lecture d'au moins une première photodiode PDi d'un pixel (1 ; 5) sélectionnée parmi les premières photodiodes PDi du pixel comprend :
pour chaque première photodiode sélectionnée PDi, la fermeture du premier commutateur IT1i, du deuxième commutateur IT2i et de l'au moins un troisième commutateur de la deuxième partie AMP1-21 du premier amplificateur associé à ladite première photodiode sélectionnée PDi pour relier électriquement ladite deuxième partie AMP1-21 à la première partie (AMP1-1) du premier amplificateur ; et
pour chaque première photodiode PDi non sélectionnée, l'ouverture du premier commutateur IT1i, du deuxième commutateur IT2i et de l'au moins un troisième commutateur de la deuxième partie AMP1-21 du premier amplificateur associé à ladite première photodiode non sélectionnée PDi pour déconnecter électriquement ladite deuxième partie AMP1-21 de la première partie (AMP1-1) du premier amplificateur.
